# EUROPEAN PATENT APPLICATION

(11) **EP 2 466 946 A1**
(43) Date of publication of application: **20.06.2012**
(21) Application number: 10195686.0
(22) Date of filing: 17.12.2010
(51) Int. Cl.: H04W 24/10, H04W 48/16

(54) **Method and apparatus for scanning for cells in a cellular network**

(71) Applicant: Research In Motion Limited, Waterloo, ON N2L 3W8 (CA)
(72) Inventor: Singh, Ajay, Waterloo Ontario N2L 3W8 (CA); Naqvi, Noushad, Waterloo Ontario N2L 3W8 (CA)
(74) Representative: MERH-IP Matias Erny Reichl Hoffmann

(57) **Abstract**

Provided is a method and apparatus for scanning for cells in a cellular network. Upon an event triggering scanning while a mobile device resides in a current cell of a cellular network, the mobile device scans for at least one cell purported by the cellular network to neighbor the current cell. In accordance with an embodiment of the disclosure, the mobile device also scans for at least one other cell that is not purported by the cellular network to neighbor the current cell. This occurs promptly without waiting for completion of the scanning for cells purported by the cellular network to neighbor the current cell.. Advantageously, in the case of poor network planning, the mobile device might promptly acquire a cell that is not purported by the cellular network to neighbor the current cell but nonetheless offers coverage in vicinity of the current cell.

## Description

### Field of the Disclosure

This disclosure relates to mobile devices, and more particularly to scanning for cells in a cellular network.

### Background of the Disclosure

When a mobile device resides in a current cell of a cellular network, the mobile device receives neighbor information broadcasted from a BTS (base transceiver station) of the current cell. The neighbor information indicates frequencies used by neighboring cells. The mobile device can therefore scan the frequencies indicated by the neighbor information when searching for another cell. This might be performed for example if the mobile device is searching for a cell that provides better service than what is being provided by the current cell.

A multimode device supports more than one RAT (Radio Access Technology) and typically operates on multiple frequency bands. As a first example, a wireless device might support GSM/GPRS/EDGE (Global System for Mobile communications / General Packet Radio Service / Enhanced Data rates for GSM Evolution), UMTS/HSPA (Universal Mobile Telecommunications System / High-Speed Packet Access), and CDMA2000 1x/1xEV-DO (Code Division Multiple Access 2000 1x / 1x Evolution-Data Optimized or 1x Evolution-Data only). As a second example, a wireless device might support GSM/GPRS/EDGE, and UMTS/HSPA. Other multimode devices might support a different set of RATs. Some multimode devices support LTE (Long Term Evolution).

### Summary of the Disclosure

According to a broad aspect, there is provided a method for execution in a mobile device, the method comprising: upon an event triggering scanning while the mobile device resides in a current cell of a cellular network, executing both: (a) scanning for at least one cell purported by the cellular network to neighbor the current cell; and (b) scanning for at least one other cell that is not purported by the cellular network to neighbor the current cell; wherein step (b) starts before completion of step (a), and step (a) starts before completion of step (b).

According to another broad aspect, there is provided a non-transitory computer readable medium having computer executable instructions stored thereon for execution on a processor of a mobile device so as to implement the method summarized above.

According to another broad aspect, there is provided a mobile device comprising: a wireless access radio; a processor; and a scanning function configured to implement the method summarized above.

Other aspects and features of the present disclosure will become apparent, to those ordinarily skilled in the art, upon review of the following description of the specific embodiments of the disclosure.

### Brief Description of the Drawings

Embodiments will now be described with reference to the attached drawings in which:
Figure 1 is a block diagram of an example communication system featuring a cellular network and a mobile device;
Figure 2 is a flowchart of a method of scanning for cells in a cellular network;
Figure 3 is a flowchart of another method of scanning for cells in a cellular network;
Figure 4 is a flowchart of another method of scanning for cells in a cellular network; and
Figure 5 is a block diagram of another mobile device.

### Detailed Description of Embodiments

It should be understood at the outset that although illustrative implementations of one or more embodiments of the present disclosure are provided below, the disclosed systems or methods or both may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

### Apparatus for Scanning

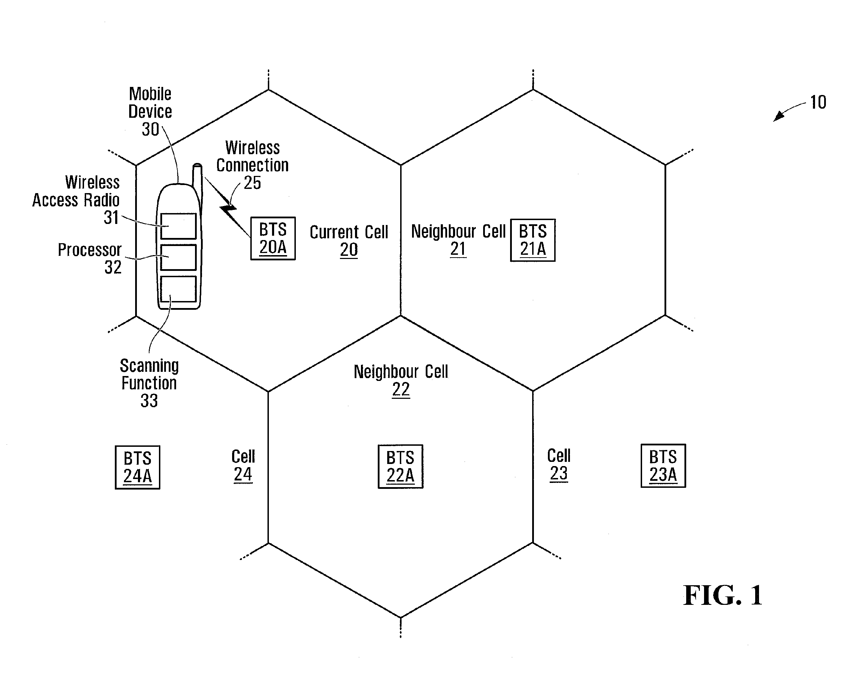

Referring now to Figure 1, shown is a block diagram of an example communication system featuring a cellular network 10 and a mobile device 30. The cellular network 10 has a plurality of cells 20,21,22,23,24 each having a respective BTS 20A,21A,22A,23A,24A configured to use a first RAT for example GSM. The cellular network 10 can have more cells than that shown and might have other network components, but they are not shown for sake of simplicity. Some of these network components might be shared with other networks (not shown) that might overlap with the cellular network 10.

If the communication system is to support a second RAT, for example UMTS, then the communication system might have a second network (not shown) having BTSs that are configured to use the second RAT. The BTSs of the second network would not generally be coterminous with the BTSs 20A,21A,22A,23A,24A of the first network 10, but they can be in alternative configurations. There may be an additional network (not shown) for each additional RAT supported by the communication system. In alternative configurations, the BTSs 20A,21A,22A,23A,24A of the cellular network 10 support more than one RAT, for example both GSM and UMTS, in which case there might not be a second or additional core network, but there would still be two radio access networks for the two RATs. Other configurations are possible.

The plurality of cells 20,21,22,23,24 include a current cell 20 in which the mobile device 30 resides, cells 21,22 that are purported by the cellular network 10 to neighbor the current cell 20 (hereinafter "neighbor cells 21,22"), and cells 23,24 that are not purported by the cellular network 10 to neighbor the current cell 20 (hereinafter "other cells 23,24"). A cell is typically determined to neighbor another cell based on various factors relating to coverage in vicinity. Neighboring cells are typically in the same vicinity and might have significant overlapping area when they are from separate networks. In the illustrated example, it is assumed that the cell 24 is not purported by the cellular network 10 to neighbor the current cell 20 even though it offers coverage in vicinity of the current cell 20. It is also assumed that the neighbor cells 21,22 might not offer coverage in vicinity of the current cell 20. This might be for example a result of poor network planning.

The mobile device 30 has a wireless access radio 31, a processor 32, and a scanning function 33. The mobile device 30 might have other components, but they are not shown for sake of simplicity. The mobile device 30 is configured to support the first RAT of the cellular network 10, and might support additional RATs. In some configurations, the wireless access radio 31 includes a respective radio for each supported RAT. In alternative configurations, the wireless access radio 31 is a single radio supporting the plurality of RATs. Other configurations are possible.. The mobile device 30 is one of a plurality of wireless devices (not shown) of the communication system. The other wireless devices might be configured in a similar manner as the mobile device 30, or configured differently.

The operation of the communication system will now be described by way of example. The mobile device 30 might have service in the current cell 20 in which case the mobile device 30 might communicate with the BTS 20A using the first RAT over a wireless connection 25. The communication might for example include a voice call or other forms of communication such as packet data communication (e.g. email communication). Regardless of whether the mobile device 30 has service in the current cell 20, it is assumed that an event triggering scanning occurs. The event triggering scanning might for example be a cell selection criterion S no longer being met for the current cell 20.

A first approach is for the mobile device 30 to begin searching only for the neighbor cells 21,22. This approach can work well in the case of proper network planning. However, in the case of poor network planning as assumed in the present example, searching only for the neighbor cells 21,22 can result in the mobile device 30 being unable to acquire a new cell. After failing to acquire a new cell for a defined period of time (e.g. 12 seconds), the mobile device 30 can subsequently scan for the other cells 23,24 and then acquire the cell 24 that offers coverage in vicinity of the current cell 20. In the meantime, the mobile device 30 might suffer with little or no service in the current cell 20. Unfortunately, this can cause the mobile device 30 to miss incoming calls..

A second approach will now be described in accordance with an embodiment of the disclosure. According to the second approach, the scanning function 33 implements a method in the mobile device 30 so that the scanning for the neighbor cells 21,22 and the scanning for other cells 23,24 are both executed upon the event triggering scanning. Therefore, the mobile device 30 does not wait the defined period of time before scanning for the other cells 23,24. Advantageously, in the case of poor network planning where each neighbor cell 21,22 is inadequate, the mobile device 30 might promptly acquire the cell 24 that offers coverage in vicinity of the current cell 20 without having to wait the defined period of time as in the first approach. In this way, the mobile device might avoid an out of service state for the defined period of time when other good cells are present in the given radio environment. This might translate into better user experience in terms of continuity of service.

In the examples provided herein, reference is made to a mobile device "scanning" for cells. Those skilled in the art will appreciate that this may for example involve the mobile device detecting, synchronising, or monitoring at least one of intra-frequency, inter-frequency and inter-RAT cells.. In some implementations, the wireless access radio 31 scans for the neighbor cells 21,22 and scans for the other cells 23,24 in a time-shared manner. This may be the case where the wireless access radio 31 is a single radio that cannot scan for more than one cell at a given time. In alternative implementations, the wireless access radio 31 scans for the neighbor cells 21,22 and scans for the other cells 23,24 in parallel. This may be the case where the wireless access radio 31 includes more than one radio for performing scanning in parallel.

As a specific example of scanning in a time-shared manner, the wireless access radio 31 might perform scanning in time intervals as follows:

| Cells to Scan | Time Interval | | | | | | |
|---|---|---|---|---|---|---|---|
| | T1 | T2 | T3 | T4 | T5 | T6 | T7 |
| Neighbor Cells | Yes | Yes | No | Yes | Yes | No | No |
| Other Cells | No | No | Yes | No | No | Yes | No |

In this example the wireless access radio 31 starts scanning for the neighbor cells 21,22 at T1. Later at T3 the wireless access radio 31 starts scanning for the other cells 23,24. At this time the scanning for the neighbor cells 21,22 is on hold, as it is assumed that the wireless access radio 31 cannot scan for the neighbor cells 21,22 and the other cells 23,24 at the same time. The scanning continues in a time-shared manner up until the other cell 24 is discovered and acquired at T6 thereby ending the scanning at T7. In each time interval noted above, there may be measurements performed for one or more frequencies in respect of one or more RATs. It is to be understood that the manner in which the time sharing is performed is implementation specific.

Regardless, of whether scanning is performed in a time shared manner or in a parallel manner, it is noted that the scanning for the other cells 23,24 starts before completion of the scanning for the neighbor cells 21,22. Likewise, the scanning for the neighbor cells 21,22 starts before completion of the scanning for the other cells 23,24, This is in direct contrast with the first approach described above in which the mobile device 30 searches for the other cells 23,24 only after completion of the searching for the neighbor cells 21,22 for the defined period of time (e.g. 12 seconds).

In the illustrated example, the scanning function 33 is implemented as software and is executed on the processor 32. However, more generally, the scanning function 33 may be implemented as software, hardware, firmware, or any appropriate combination thereof. Although shown as a single component, more generally, the scanning function 33 may have one or more components. The one or more components may be integrated with other components. Also, functionality of the scanning function 33 might be combined with other components. For example, in alternative implementations, the scanning function 33 and the wireless access radio 31 are combined as a single component. Other implementations are possible..

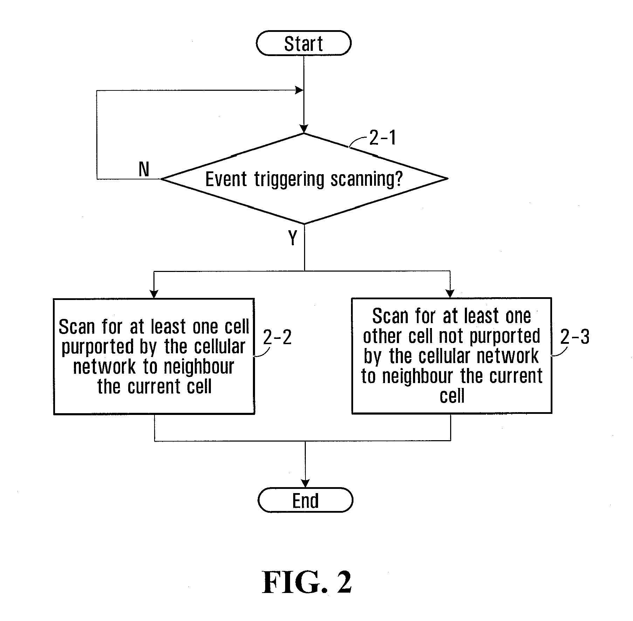

Further details of scanning for cells in a cellular network are described below with reference to Figures 2 through 5.

### Method for Scanning

Referring now to Figure 2, shown is a flowchart of a method of scanning for cells in a cellular network. This method can be implemented by a mobile device, for example by the scanning function 33 of the mobile device 30 shown in Figure 1. More generally, this method can be implemented by any appropriately configured mobile device.

If at step 2-1 there is an event triggering scanning while the mobile device resides in a current cell of a cellular network, then at step 2-2 the mobile device scans for at least one cell purported by the cellular network to neighbor the current cell. In accordance with an embodiment of the disclosure, the mobile device also scans for at least one other cell that is not purported by the cellular network to neighbor the current cell. The scanning at step 2-2 and the scanning at 2-3 are both executed upon the event triggering scanning, for example in a time-shared manner or in a parallel manner as described earlier with reference to Figure 1. Advantageously, in the case of poor network planning where each cell purported by the cellular network to neighbor the current cell is inadequate, the mobile device might promptly acquire another cell that offers coverage in vicinity of the current cell.

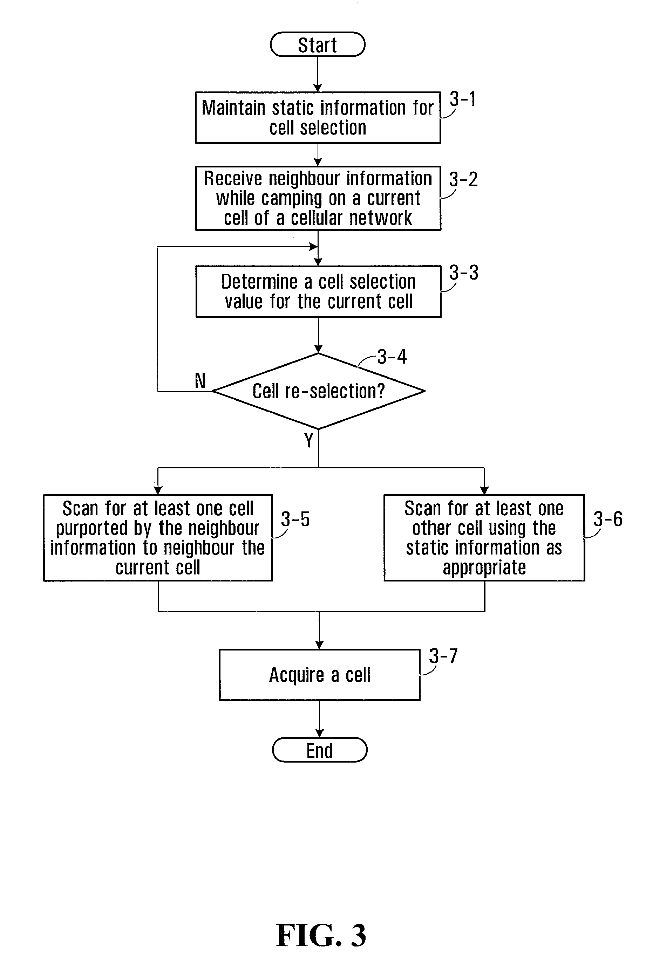

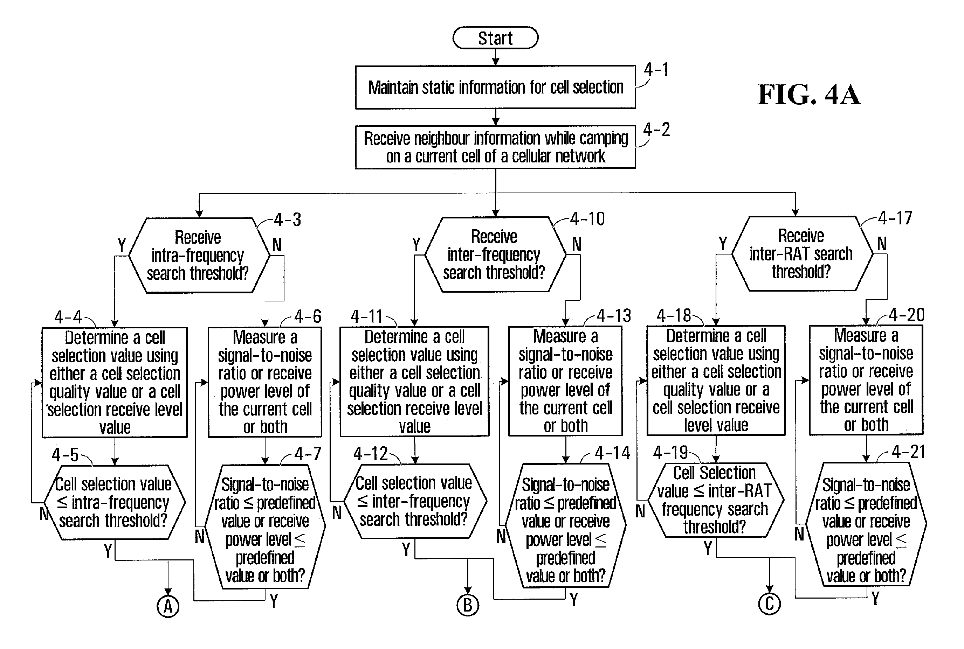

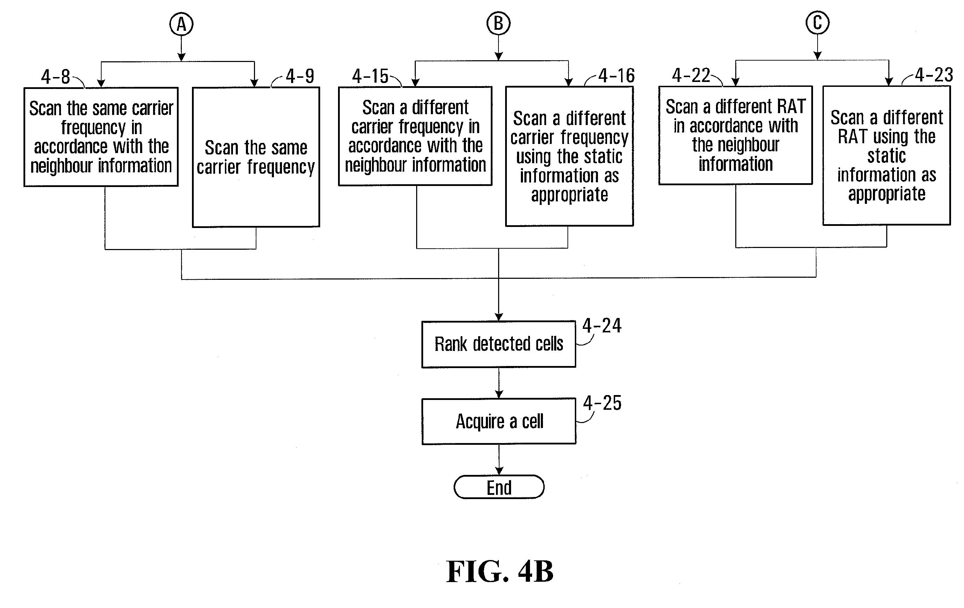

In some implementations, the event triggering scanning is a selection criterion S not being met. Examples of this are provided below with reference to Figures 3 and 4. In other implementations, the event triggering scanning is the mobile device determining that a level of service being provided by the current cell is not preferred. For example, if the mobile device determines that the current cell provides only circuit-switched service and not packet-switched service, then the mobile device might scan for another cell that can offer both circuit-switched service and packet-switched service. There may be other possibilities for the event triggering scanning.

In some implementations, the mobile device is aware of each cell purported by the cellular network to neighbor the current cell by receiving neighbor information. The neighbor information might for example be measurement control system information broadcasted on an ongoing basis from a BTS in the current cell. The neighbor information indicates frequencies used by neighbor cells and might also indicate additional information such as RAT used by neighbor cells for example. Examples in which the mobile device uses neighbor information are provided below with reference to Figures 3 and 4. In alternative implementations, the mobile device is preconfigured with information identifying cells purported by the cellular network to neighbor the current cell. Other implementations are possible.

Referring now to Figure 3, shown is a flowchart of another method of scanning for cells in a cellular network. This method can be implemented by a mobile device, for example by the scanning function 33 of the mobile device 30 shown in Figure 1. More generally, this method can be implemented by any appropriately configured mobile device. It is to be understood that this method is very specific for exemplary purposes only.

The method begins with the mobile device maintaining static information for cell selection at step 3-1. The static information might for example be hard-coded on the mobile device. At step 3-2, the mobile device receives neighbor information while camping on a current cell of a cellular network. While camping on the current cell, the mobile device also determines a cell selection value for the current cell as indicated at step 3-3. At step 3-4, the mobile device determines whether the cell selection value is at a level associated with cell re-selection. As long as the cell selection value is not at a level associated with re-cell selection, the mobile device continues to camp on the current cell without searching for another cell.

However, if at step 3-4 the mobile device determines that the cell selection value is at a level associated with re-cell selection, then at step 3-5 the mobile device scans for at least one cell purported by the neighbor information to neighbor the current cell. In accordance with an embodiment of the disclosure, at step 3-6 the mobile device also scans for at least one other cell using the static information as appropriate. The scanning at step 3-5 and the scanning at 3-6 are both executed upon the event triggering scanning, for example in a time-shared manner or in a parallel manner as described earlier with reference to Figure 1.

The scanning at steps 3-5 and 3-6 might result in the mobile device acquiring a cell at step 3-7. Advantageously, in the case of poor network planning, the mobile device might promptly acquire a cell that is not indicated by the neighbor information but nonetheless offers coverage in vicinity of the current cell.

There are many possibilities for the scanning at steps 3-5 and 3-6. The scanning can for example include any one or more of intra-frequency search, inter-frequency search, and inter-RAT search. The scanning at step 3-6 might for example use the static information in the case of inter-frequency searches or inter-RAT searches or both. Note that the static information is not needed for intra-frequency searches. An example with intra-frequency search, inter-frequency search, and inter-RAT search is described below with reference to Figure 4.

Referring now to Figure 4, shown is a flowchart of another method of scanning for cells in a cellular network. This method can be implemented by a mobile device, for example by the scanning function 33 of the mobile device 30 shown in Figure 1. More generally, this method can be implemented by any appropriately configured mobile device. It is to be understood that this method is very specific for exemplary purposes only.

The method begins with the mobile device maintaining static information for cell selection at step 4-1. The static information might for example be hard-coded on the mobile device. At step 4-2, the mobile device receives neighbor information while camping on a current cell of a cellular network. The method includes three processes: a first process for intra-frequency search as indicted at steps 4-3 through 4-9, a second process for inter-frequency search as indicated at steps 4-10 through 4-16, and a third process for inter-RAT search as indicated at steps 4-17 through 4-23. In alternative implementations, only one or two of these processes may be present. Whilst the illustrated example shows that all three processes may operate concurrently, it is noted that the mobile device would typically execute only one process at a time. However, in alternative implementations, execution of two or more of these processes at the same time is possible.

The first process (i.e. intra-frequency search) will now be described. If at step 4-3 the mobile device has received an intra-frequency search threshold for the current cell, then at step 4-4 the mobile device determines a cell selection value for comparison with the intra-frequency search threshold. In some implementations, the cell selection value is determined using either a cell selection quality value or a cell selection receive level value. As long as the cell selection value is greater than the intra-frequency search threshold, the intra-frequency search is not triggered. If at step 4-5 the cell selection value is less than or equal to the intra-frequency search threshold, then the mobile device performs the intra-frequency search as will be described below. In specific UMTS implementations, the intra-frequency search threshold is *S-intrasearch* and the cell selection value is *S*x as calculated using either *Squal* if the current cell is an FDD (Frequency Division Duplex) cell or *Srxlev* if the current cell is a TDD (Time-Division Duplex) cell, in accordance with clause 5.2.3.1.2 from 3rd Generation Partnership Project *3GPP spec 25.304 V5.8.0* http://www.3gpp.org (2005-03). The intra-frequency search is triggered if *S*x ≤ *S-intrasearch* for the current cell. The mobile device will trigger the detected cell measurements in Idle or CELL_PCH/URA_PCH state. See table A below for details of the foregoing UMTS terms.

If at step 4-3 the mobile device has not received an intra-frequency search threshold, then the intra-frequency search is conditionally triggered based on a signal-to-noise ratio or a receive power level of the current cell or both. In this manner, the mobile device can determine whether to perform the intra-frequency search even if an intra-frequency search threshold is not received. At step 4-6 the mobile device measures the signal-to-noise ratio or the receive power level of the current cell or both. If at step 4-7 the signal-to-noise ratio is less than or equal to a predefined value or the receive power level is less than or equal to a predefined value or both, then the mobile device performs the intra-frequency search as will be described below In specific UMTS implementations, the intra-frequency search is triggered when signal-to-noise ratio CPICH EcNO of the current cell is at -14 dB. The mobile device will trigger the detected cell measurements in Idle or CELL_PCH/URA_PCH state. Alternatively, or additionally, the intra-frequency search is triggered based on the receive power level of the current cell (e.g. Received Signal Code Power 'RSCP' or Received Signal Strength Indication 'RSSI' in 3G, Reference Signal Receive Power 'RSRP', or Reference Signal Receive Quality 'RSRQ' in LTE). Other implementations are possible.

The intra-frequency search will now be described with reference to steps 4-8 and 4-9. At step 4-8, the mobile device scans the same carrier frequency used by the current cell, in accordance with the neighbor information that has been received. Therefore, the mobile device searches for cells that are purported by the cellular network to neighbor the current cell. In accordance with an embodiment of the disclosure, at step 4-9 the mobile device also scans the same carrier frequency. Note that the static information is not needed for this scanning. The scanning at step 4-8 and the scanning at 4-9 are both executed, for example in a time-shared manner or in a parallel manner as described earlier with reference to Figure 1. Advantageously, in the case of poor network planning, the mobile device might promptly discover a cell that is not indicated by the neighbor information but nonetheless offers coverage in vicinity of the current cell.

The second process (i.e. inter-frequency search) will now be described. If at step 4-10 the mobile device has received an inter-frequency search threshold for the current cell, then at step 4-11 the mobile device determines a cell selection value for comparison with the inter-frequency search threshold.. In some implementations, the cell selection value is determined using either a cell selection quality value or a cell selection receive level value. As long as the cell selection value is greater than the inter-frequency search threshold, the inter-frequency search is not triggered. If at step 4-12 the cell selection value is less than or equal to the inter-frequency search threshold, then the mobile device performs the inter-frequency search as will be described below. In specific UMTS implementations, the inter-frequency search threshold is *S-intersearch* and the cell selection value is Sx as calculated using either *Squal* if the current cell is an FDD cell or *Srxlev* if the current cell is a TDD cell, in accordance with clause 5.2.3.1.2 from 3rd Generation Partnership Project *3GPP spec 25.304 V5.8..0* http://www.3gpp.org (2005-03). The inter-frequency search is triggered if *Six ≤ S-intersearch,* or *Srxlev ≤ SsearchHCS* if *SsearchHCS* is signaled The mobile device will trigger the detected cell measurements in Idle or CELL_PCH/URA_PCH state. See table A below for details of the foregoing UMTS terms.

If at step 4-10 the mobile device has not received an inter-frequency search threshold, then the inter-frequency search is conditionally triggered based on a signal-to-noise ratio or a receive power level of the current cell or both. In this manner, the mobile device can determine whether to perform the inter-frequency search even if an inter-frequency search threshold is not received. At step 4-13 the mobile device measures the signal-to-noise ratio or the receive power level of the current cell or both. If at step 4-14 the signal-to-noise ratio is less than or equal to a predefined value or the receive power level is less than or equal to a predefined value or both, then the mobile device performs the inter-frequency search as will be described below. In specific UMTS implementations, the inter-frequency search is triggered when signal-to-noise ratio CPICH EcNO of the current cell is at -15 dB. The mobile device will trigger the detected cell measurements in Idle or CELL_PCH/URA_PCH state. Alternatively, or additionally, the inter-frequency search is triggered based on the receive power level of the current cell (e.g. RSCP or RSSI in 3G, RSRP, or RSRQ in LTE). Other implementations are possible.

The inter-frequency search will now be described with reference to steps 4-15 and 4-16. At step 4-15, the mobile device scans a different carrier frequency from that used by the current cell, in accordance with the neighbor information that has been received. Therefore, the mobile device searches for cells that are purported by the cellular network to neighbor the current cell. In accordance with an embodiment of the disclosure, at step 4-16 the mobile device also scans a different carrier frequency using the static information as appropriate. This may or may not involve the carrier frequency from step 4-15. The static information is used when it includes information useful for the scanning such as known frequencies for example. The scanning at step 4-15 and the scanning at 4-16 are both executed, for example in a time-shared manner or in a parallel manner as described earlier with reference to Figure 1. Advantageously, in the case of poor network planning, the mobile device might promptly discover a cell that is not indicated by the neighbor information but nonetheless offers coverage in vicinity of the current cell.

The third process (i.e. inter-RAT search) will now be described. If at step 4-17 the mobile device has received an inter-RAT search threshold for the current cell, then at step 4-18 the mobile device determines a cell selection value for comparison with the inter-RAT search threshold. In some implementations, the cell selection value is determined using either a cell selection quality value or a cell selection receive level value.. As long as the cell selection value is greater than the inter-RAT search threshold, the inter-RAT search is not triggered. If at step 4-19 the cell selection value is less than or equal to the inter-RAT search threshold, then the mobile device performs the inter-RAT search as will be described below. In specific UMTS implementations, the inter-RAT search threshold is *SsearchRAT m* and the cell selection value is Sx as calculated using either *Squal* if the current cell is an FDD cell or *Srxlev* if the current cell is a TDD cell, in accordance clause 5.2.3.1.2 from 3rd Generation Partnership Project *3GPP spec 25.304 V5.8.0* http://www.3gpp.org (2005-03). The intra-frequency search is triggered if Sx ≤ *SsearchRAT m,* or *Srxlev = SHCS,RATm* if *SHCS,RATm* is signaled. The mobile device will trigger the detected cell measurements in Idle or CELL_PCH/URA_PCH state. See table A below for details of the foregoing UMTS terms.

If at step 4-17 the mobile device has not received an inter-RAT search threshold, then the inter-RAT search is conditionally triggered based on a signal-to-noise ratio or a receive power level of the current cell or both. In this manner, the mobile device can determine whether to perform the inter-RAT search even if an inter-RAT search threshold is not received. At step 4-20 the mobile device measures the signal-to-noise ratio or the receive power level of the current cell or both. If at step 4-21 the signal-to-noise ratio is less than or equal to a predefined value or the receive power level is less than or equal to a predefined value or both, then the mobile device performs the inter-RAT search as will be described below. In specific UMTS implementations, the inter-RAT search search is triggered when signal-to-noise ratio CPICH EcNO of the current cell is at -16 dB. The mobile device will trigger the detected cell measurements in Idle or CELL_PCH/URA_PCH state. Alternatively, or additionally, the inter-RAT search is triggered based on the receive power level of the current cell (e.g. RSCP or RSSI in 3G, RSRP, or RSRQ in LTE). Other implementations are possible.

The inter-RAT search will now be described with reference to steps 4-22 and 4-23. At step 4-22, the mobile device scans a different RAT from that used by the current cell, in accordance with the neighbor information that has been received. Therefore, the mobile device searches for cells that are purported by the cellular network to neighbor the current cell. In accordance with an embodiment of the disclosure, at step 4-23 the mobile device also scans a different RAT using the static information as appropriate. This may or may not involve the RAT from step 4-22. The static information is used when it includes information useful for the scanning such as known frequencies for a RAT for example. The scanning at step 4-22 and the scanning at 4-23 are both executed, for example in a time-shared manner or in a parallel manner as described earlier with reference to Figure 1. Advantageously, in the case of poor network planning, the mobile device might promptly discover a cell that is not indicated by the neighbor information but nonetheless offers coverage in vicinity of the current cell.

The scanning at steps 4-8, 4-9, 4-15, 4-16, 4-22 and 4-23 might result in the mobile device discovering one or more cells. In some implementations, in the event that more than one cell is detected, the mobile device ranks the detected cells as indicated at step 4-24. The ranking may for example be based on signal quality level. Of course if only one cell is detected there is no need to perform the ranking. At step 4-25 the mobile device acquires one of the detected cells based on the ranking. In the event that only one cell is detected, the ranking step can be skipped.

The method described above for triggering the detected cell measurements for intra frequency cells, inter frequency cells and inter RAT m cells irrespective of whether or not HCS (Hierarchical Cell Structure) is used in the current cell. The triggering conditions are valid regardless of whether the mobile device is slow moving or fast moving. The method of detected cell measurement can be used in LTE in order to reduce or mitigate the effects of ill-planned network configurations. The given cell reselection by mobile devices in idle, CELL_PCH/URA_PCH/CELL_FACH state can also help the network vendors to better plan their radio network and leverage the detected cell measurements for RF planning.

The following table provides details of the UMTS terms referred to above with reference to Figure 4.

**Table A - UMTS terms**

| | |
|---|---|
| *Sintrasearch* | This specifies the threshold (in dB) for intra frequency measurements and for the HCS measurement rules |
| *Sintersearch* | This specifies the threshold (in dB) for inter-frequency measurements and for the HCS measurement rules |
| *SsearchRAT m* | This specifies the threshold (in dB) for inter-RAT measurements and for the HCS measurement rules |
| *SsearchHCS* | This threshold is used in the measurement rules for cell re-selection When HCS is used, it specifies the limit for Srxlev in the serving cell below which the UE shall initiate measurements of all neighboring cells of the serving cell When HCS is not used, it specifies the limit for Srxlev in the serving cell below which the UE ranks inter-frequency neighboring cells of the serving cell |
| *SHCS, RATm* | This threshold is used in the measurement rules for cell re-selection When HCS is used, it specifies the RAT specific threshold in the serving cell used in the inter-RAT measurement rules When HCS is not used, it specifies the limit for Srxlev in the serving cell below which the UE ranks inter-RAT neighboring cells of the serving cell |
| *Squal* | Cell Selection quality value (dB) |
| | *Squal = Q_{qualmeas} - (Qqualmin + Q_{qualminOffset})* |
| | Applicable only for FDD cells |
| *Srxlev* | Cell Selection RX level value (dB) |
| | *Srxlev* = *Qᵣₓₗₑᵥₘₑₐₛ - (Qrxlevmin + QrxlevminOffset) -* Pcompensation |
| | Applicable for both FDD and TDD cells |
| *Q_{qualmeas}* | Measured cell quality value The quality of the received signal expressed in CPICH Ec/NO (dB) for FDD cells CPICH Ec/NO shall be averaged as specified in [10] Applicable only for FDD cells |
| *Qᵣₓₗₑᵥₘₑₐₛ* | Measured cell RX level value This is received signal, CPICH RSCP for FDD cells (dBm) and P-CCPCH RSCP for TDD cells (dBm) |
| *Qqualmin* | Minimum quality level in the cell (dB) Applicable only for FDD cells |
| *QqualminOffset* | Offset to the signalled *Qqualmin* taken into account in the Squal evaluation as a result of a periodic search for a higher priority PLMN while camped normally in a VPLMN |
| *Qrxlevmin* | Minimum RX level in the cell (dBm) |
| *QrxlevminOffset* | Offset to the signalled Qrxlevmin taken into account in the Srxlev evaluation as a result of a periodic search for a higher priority PLMN while camped normally in a VPLMN |
| *Pcompensation* | max(UE_TXPWR_MAX_RACH - P_MAX, 0) (dB) |
| UE_TXPWR_MAX _RACH | Maximum TX power level an UE may use when accessing the cell on RACH (read in system information) (dBm) |
| P_MAX | Maximum RF output power of the UE (dBm) |

### Computer Readable Medium

In accordance with another embodiment of the application, there is provided a non-transitory computer readable medium having computer executable instructions stored thereon for execution on a processor of a mobile device so as to implement any of the methods described above with reference to Figures 2 through 4. The non-transitory computer readable medium might for example be an optical disk (e.g. CD, DVD, BD), a memory stick, a disk drive, a solid state drive, etc. Other non-transitory computer readable media are possible and are within the scope of this disclosure. More generally, the non-transitory computer readable medium can be any medium in which the computer executable instructions can be stored.

### Another Mobile Device

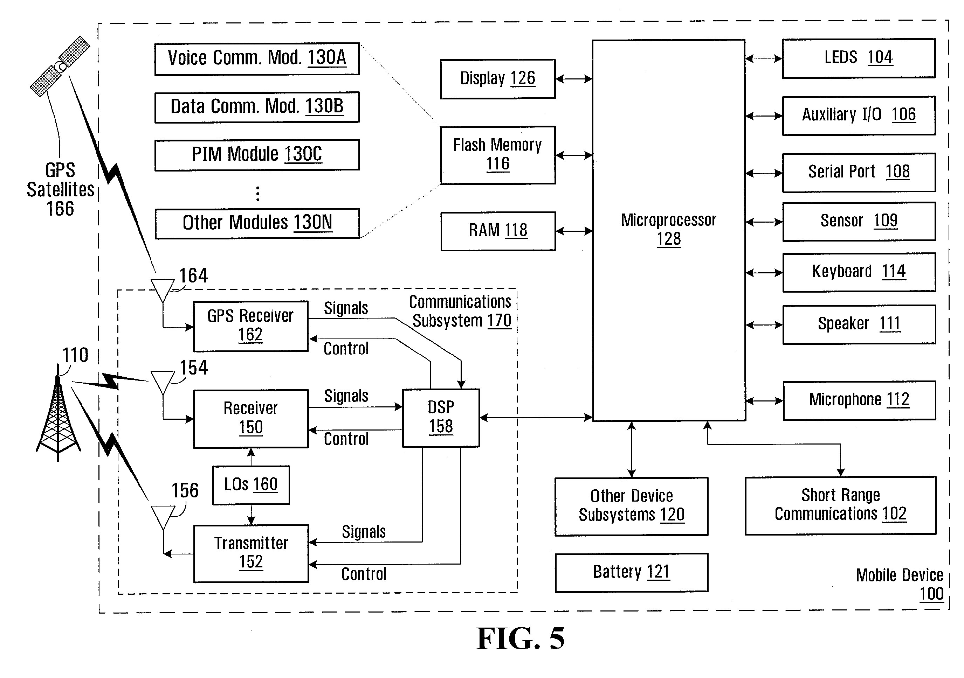

Referring now to Figure 5, shown is a block diagram of another mobile device 100 that may implement any of the device methods described herein. The mobile device 100 is shown with specific components for implementing features similar to those of the mobile device 30 shown in Figure 1. It is to be understood that the mobile device 100 is shown with very specific details for exemplary purposes only.

The mobile device 100 has a housing that may be elongated vertically, or may take on other sizes and shapes (including clamshell housing structures). The keyboard 114 may include a mode selection key, or other hardware or software for switching between text entry and telephony entry. Alternatively, the mobile device 100 may have a housing that does not take on other sizes and shapes.

A microprocessor 128 is shown schematically as coupled between a keyboard 114 and a display 126 The microprocessor 128 is a type of processor with features similar to those of the processor 32 of the mobile device 30 shown in Figure 1. The microprocessor 128 controls operation of the display 126, as well as overall operation of the mobile device 100, in response to actuation of keys on the keyboard 114 by a user.

In addition to the microprocessor 128, other parts of the mobile device 100 are shown schematically.. These include: a communications subsystem 170; a short-range communications subsystem 102; the keyboard 114 and the display 126, along with other input/output devices including a set of LEDs 104, a set of auxiliary I/O devices 106, a serial port 108, a speaker 111 and a microphone 112; as well as memory devices including a flash memory 116 and a Random Access Memory (RAM) 118; and various other device subsystems 120. The mobile device 100 may have a battery 121 to power the active elements of the mobile device 100. The mobile device 100 is in some embodiments a two-way radio frequency (RF) communication device having voice and data communication capabilities. In addition, the mobile device 100 in some embodiments has the capability to communicate with other computer systems via the Internet.

Operating system software executed by the microprocessor 128 is in some embodiments stored in a persistent store, such as the flash memory 116, but may be stored in other types of memory devices, such as a read only memory (ROM) or similar storage element. In addition, system software, specific device applications, or parts thereof, may be temporarily loaded into a volatile store, such as the RAM 118. Communication signals received by the mobile device 100 may also be stored to the RAM 118.

The microprocessor 128, in addition to its operating system functions, enables execution of software applications on the mobile device 100. A predetermined set of software applications that control basic device operations, such as a voice communications module 130A and a data communications module 130B, may be installed on the mobile device 100 during manufacture. In addition, a personal information manager (PIM) application module 130C may also be installed on the mobile device 100 during manufacture. The PIM application is in some embodiments capable of organizing and managing data items, such as e-mail, calendar events, voice mails, appointments, and task items. The PIM application is also in some embodiments capable of sending and receiving data items via a wireless network 110. In some embodiments, the data items managed by the PIM application are seamlessly integrated, synchronized and updated via the wireless network 110 with the device user's corresponding data items stored or associated with a host computer system.

Additional software modules, illustrated as another software module 130N, may be installed during manufacture. The software modules 130N may, for example, include one or more modules that control the execution of the methods described above with reference to Figures 2 through 4. Such modules might for example implement a scanning function similar to the scanning function 33 of the mobile device 30 shown in Figure 1. Note that the implementations described with reference to Figure 5 are very specific for exemplary purposes. For example, alternative implementations are possible in which the scanning function is not implemented as software and stored on the flash memory 116. More generally, the scanning function may be implemented as software, hardware, firmware, or any appropriate combination thereof.

Communication functions, including data and voice communications, are performed through the communication subsystem 170, and possibly through the short-range communications subsystem 102. The communication subsystem 170 includes a receiver 150, a transmitter 152, a GPS receiver 162, and one or more antennas, illustrated as a receive antenna 154, a transmit antenna 156, and a GPS antenna 164. In addition, the communication subsystem 170 also includes a processing module, such as a digital signal processor (DSP) 158, and local oscillators (LOs) 160. The communication subsystem 170 has features similar to those of the wireless access radio 31 of the mobile device 30 shown in Figure 1.

The specific design and implementation of the communication subsystem 170 is dependent upon the communication network in which the mobile device 100 is intended to operate. For example, the communication subsystem 170 of the mobile device 100 may be designed to operate with the Mobitex™, DataTAC™ or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access (CDMA), Personal Communications Service (PCS), Global System for Mobile Communications (GSM), etc. Examples of CDMA include 1X and 1x EV-DO. The communication subsystem 170 may also be designed to operate with an 802.11 Wi-Fi network or an 802.16 WiMAX network or both. Other types of data and voice networks, both separate and integrated, may also be utilized with the mobile device 100.

Network access may vary depending upon the type of communication system. For example, in the Mobitex™ and DataTAC™ networks, mobile devices are registered on the network using a unique Personal Identification Number (PIN) associated with each device. In GPRS networks, however, network access is typically associated with a subscriber or user of a device. A GPRS device therefore typically has a subscriber identity module, commonly referred to as a Subscriber Identity Module (SIM) card, in order to operate on a GPRS network.

When network registration or activation procedures have been completed, the mobile device 100 may send and receive communication signals over the communication network 110. Signals received from the communication network 110 by the receive antenna 154 are routed to the receiver 150, which provides for signal amplification, frequency down conversion, filtering, channel selection, etc., and may also provide analog to digital conversion. Analog-to-digital conversion of the received signal allows the DSP 158 to perform more complex communication functions, such as demodulation and decoding. In a similar manner, signals to be transmitted to the network 110 are processed (e.g., modulated and encoded) by the DSP 158 and are then provided to the transmitter 152 for digital to analog conversion, frequency up conversion, filtering, amplification and transmission to the communication network 110 (or networks) via the transmit antenna 156.

In addition to processing communication signals, the DSP 158 provides for control of the receiver 150, the transmitter 152, and the GPS receiver 162. For example, gains applied to communication signals in the receiver 150 and the transmitter 152 may be adaptively controlled through automatic gain control algorithms implemented in the DSP 158.

In a data communication mode, a received signal, such as a text message or web page download, is processed by the communication subsystem 170 and is input to the microprocessor 128. The received signal is then further processed by the microprocessor 128 for an output to the display 126, or alternatively to some other auxiliary I/O devices 106. A device user may also compose data items, such as e-mail messages, using the keyboard 114 or some other auxiliary I/O device 106, such as a touchpad, a rocker switch, a thumb-wheel, or some other type of input device, or combinations thereof. The composed data items may then be transmitted over the communication network 110 via the communication subsystem 170.

In a voice communication mode, overall operation of the device is substantially similar to the data communication mode, except that received signals are output to a speaker 111, and signals for transmission are generated by a microphone 112. Alternative voice or audio I/O subsystems, such as a voice message recording subsystem, may also be implemented on the mobile device 100. In addition, the display 126 may also be utilized in voice communication mode, for example, to display the identity of a calling party, the duration of a voice call, or other voice call related information.

Location determination using GPS technology involves receiving GPS signals from GPS satellites 166 on the antenna 164. The GPS signals are received using the GPS receiver 162 and processed by the DSP 158. Typically, GPS signals from at least four satellites are processed. Further details of GPS are omitted for simplicity..

The short-range communications subsystem 102 enables communication between the mobile device 100 and other proximate systems or devices, which need not necessarily be similar devices. For example, the short range communications subsystem may include an infrared device and associated circuits and components, or a Bluetooth™ communication module to provide for communication with similarly-enabled systems and devices.

Numerous modifications and variations of the present disclosure are possible in light of the above teachings. It is therefore to be understood that within the scope of the appended claims, the disclosure may be practised otherwise than as specifically described herein.

## Claims

1. A method for execution in a mobile device, the method comprising:
upon an event triggering (2-1) scanning while the mobile device resides in a current cell of a cellular network, executing both:
(a) scanning (2-2) for at least one cell purported by the cellular network to neighbor the current cell; and
(b) scanning (2-3) for at least one other cell not purported by the cellular network to neighbor the current cell;
wherein step (b) starts before completion of step (a), and step (a) starts before completion of step (b).

2. The method of claim 1, further comprising:
receiving (3-2) neighbor information from the cellular network while camping on the current cell;
wherein:
scanning (2-2) for at least one cell purported by the cellular network to neighbor the current cell comprises scanning (3-5) for at least one cell indicated by the neighbor information; and
scanning (2-3) for at least one other cell comprises scanning (3-6) for at least one other cell that is not indicated by the neighbor information.

3. The method of claim 2, further comprising:
maintaining (3-1) static information;
wherein scanning (3-6) for at least one other cell that is not indicated by the neighbor information comprises scanning (3-6) for at least one other cell using the static information as appropriate.

4. The method of claim 3, further comprising:
acquiring (3-7) a cell that is not indicated by the neighbor information but nonetheless offers coverage in vicinity of the current cell.

5. The method of any one of claims 1 to 4, further comprising:
determining (3-3) a cell selection value for the current cell;
determining (3-4) whether the cell selection value is at a level associated with cell re-selection;
wherein the event triggering scanning is the cell selection value being at the level associated with cell re-selection.

6. The method of claim 5, further comprising at least one of:
determining (4-7) whether to perform intra-frequency search even if an intra-frequency search threshold is not received;
determining (4-14) whether to perform inter-frequency search even if an inter-frequency search threshold is not received; and
determining (4-21) whether to perform inter-radio access technology 'RAT' search even if an inter-RAT search threshold is not received.

7. The method of claim 5 or claim 6, wherein:
determining (3-4) whether the cell selection value is at the level associated with cell re-selection comprises determining (4-5,4-7) whether the cell selection value is at a level associated with intra-frequency search; and
if the cell selection value is at a level associated with intra-frequency search:
scanning (3-5) for at least one cell purported by the cellular network to neighbor the current cell comprises scanning (4-8) a same carrier frequency used by the current cell; and
scanning (3-6) for at least one other cell comprises scanning (4-9) the same carrier frequency used by the current cell.

8. The method of claim 7, wherein:
determining (4-4,4-6) the cell selection value for the current cell comprises at least one of (i) measuring (4-6) a signal-to-noise ratio of the current cell and (ii) measuring (4-6) a receive power level of the current cell; and
determining (4-5,4-7) whether the cell selection value is at a level associated with intra-frequency search comprises at lest one of (i) determining (4-7) whether the signal-to-noise ratio is less than or equal to a predefined value and (ii) determining (4-7) whether the receive power level is less than or equal to a predefined value.

9. The method of claim 5 or claim 6, wherein:
determining (3-4) whether the cell selection value is at a level associated with cell re-selection comprises determining (4-12,4-14) whether the cell selection value is at a level associated with inter-frequency search; and
if the cell selection value is at a level associated with inter-frequency search:
scanning (3-5) for at least one cell purported by the cellular network to neighbor the current cell comprises scanning (4-15) a different carrier frequency from that used by the current cell; and
scanning (3-6) for at least one other cell comprises scanning (4-16) a different carrier frequency from that used by the current cell.

10. The method of claim 9, wherein:
determining (4-11,4-13) the cell selection value for the current cell comprises at least one of (i) measuring (4-13) a signal-to-noise ratio of the current cell and (ii) measuring (4-13) a receive power level of the current cell; and
determining (4-12,4-14) whether the cell selection value is at a level associated with inter-frequency search comprises at least one of (i) determining (4-14) whether the signal-to-noise ratio is less than or equal to a predefined value and (ii) determining (4-14) whether the receive power level is less than or equal to a predefined value.

11. The method of claim 5 or claim 6, wherein:
determining (3-4) whether the cell selection value is at a level associated with cell re-selection comprises determining (4-19,4-21) whether the cell selection value is at a level associated with inter-RAT search; and
if the cell selection value is at a level associated with inter-RAT search:
scanning (3-5) for at least one cell purported by the cellular network to neighbor the current cell comprises scanning (4-22) for cells that use a different RAT from that used by the current cell; and
scanning (3-6) for at least one other cell comprises scanning (4-23) for cells that use a different RAT from that used by the current cell.

12. The method of claim 11, wherein:
determining (4-18,4-20) the cell selection value for the current cell comprises at least one of (i) measuring (4-20) a signal-to-noise ratio of the current cell and (ii) measuring (4-20) a receive power level of the current cell; and
determining (4-19,4-21) whether the cell selection value is at a level associated with inter-RAT search comprises at least one of (i) determining (4-21) whether the signal-to-noise ratio is less than or equal to a predefined value and (ii) determining (4-21) whether the receive power level is less than or equal to a predefined value..

13. The method of any one of claims 6 to 12, further comprising:
ranking (4-24) based on signal quality level any cell(s) detected from at least one of intra-frequency search, inter-frequency search, and inter-RAT search; and
acquiring (4-25) a cell based on the ranking.

14. A non-transitory computer readable medium (33) having computer executable instructions stored thereon for execution on a processor (32) of a mobile device (30) so as to implement the method of any one of claims 1 to 12.

15. A mobile device (30) comprising:
a wireless access radio (31);
a processor (32); and
a scanning function configured to implement the method of any one of claims 1 to 12.

## Amended claims

### Amended claims in accordance with Rule 137(2) EPC.

**1.** A method for execution in a mobile device, the method comprising:
upon an event triggering (2-1) scanning while the mobile device resides in a current cell of a cellular network, executing both:
(a) scanning (2-2) for at least one cell purported by the cellular network to neighbor the current cell; and
(b) scanning (2-3) for at least one other cell not purported by the cellular network to neighbor the current cell;
wherein step (b) starts before completion of step (a), and step (a) starts before completion of step (b).

**2.** The method of claim 1, further comprising:
receiving (3-2) neighbor information from the cellular network while camping on the current cell;
wherein:
scanning (2-2) for at least one cell purported by the cellular network to neighbor the current cell comprises scanning (3-5) for at least one cell indicated by the neighbor information; and
scanning (2-3) for at least one other cell comprises scanning (3-6) for at least one other cell that is not indicated by the neighbor information.

**3.** The method of claim 2, further comprising:
storing (3-1) static information;
wherein scanning (3-6) for at least one other cell that is not indicated by the neighbor information comprises scanning (3-6) for at least one other cell using the static information as appropriate.

**4.** The method of claim 3, further comprising:
in some situations, acquiring (3-7) a cell that is not indicated by the neighbor information but nonetheless offers coverage in vicinity of the current cell.

**5.** The method of any one of claims 1 to 4, further comprising:
determining (3-3) a cell selection value for the current cell;
determining (3-4) whether the cell selection value is at a level associated with cell re-selection;
wherein the event triggering scanning is the cell selection value being at the level associated with cell re-selection.

**6.** The method of claim 5, further comprising at least one of:
determining (4-7) whether to perform intra-frequency search even if an intra-frequency search threshold is not received;
determining (4-14) whether to perform inter-frequency search even if an inter-frequency search threshold is not received; and
determining (4-21) whether to perform inter-radio access technology ,RAT, search even if an inter-RAT search threshold is not received.

**7.** The method of claim 5 or claim 6, wherein:
determining (3-4) whether the cell selection value is at the level associated with cell re-selection comprises determining (4-5,4-7) whether the cell selection value is at a level associated with intra-frequency search; and
if the cell selection value is at a level associated with intra-frequency search:
scanning (3-5) for at least one cell purported by the cellular network to neighbor the current cell comprises scanning (4-8) a same carrier frequency used by the current cell; and
scanning (3-6) for at least one other cell comprises scanning (4-9) the same carrier frequency used by the current cell.

**8.** The method of claim 7, wherein:
determining (4-4,4-6) the cell selection value for the current cell comprises at least one of (i) measuring (4-6) a signal-to-noise ratio of the current cell and (ii) measuring (4-6) a receive power level of the current cell; and
determining (4-5,4-7) whether the cell selection value is at a level associated with intra-frequency search comprises at least one of (i) determining (4-7) whether the signal-to-noise ratio is less than or equal to a predefined value and (ii) determining (4-7) whether the receive power level is less than or equal to a predefined value.

**9.** The method of claim 5 or claim 6, wherein:
determining (3-4) whether the cell selection value is at a level associated with cell re-selection comprises determining (4-12,4-14) whether the cell selection value is at a level associated with inter-frequency search; and
if the cell selection value is at a level associated with inter-frequency search:
scanning (3-5) for at least one cell purported by the cellular network to neighbor the current cell comprises scanning (4-15) a different carrier frequency from that used by the current cell; and
scanning (3-6) for at least one other cell comprises scanning (4-16) a different carrier frequency from that used by the current cell.

**10.** The method of claim 9, wherein:
determining (4-11,4-13) the cell selection value for the current cell comprises at least one of (i) measuring (4-13) a signal-to-noise ratio of the current cell and (ii) measuring (4-13) a receive power level of the current cell; and
determining (4-12,4-14) whether the cell selection value is at a level associated with inter-frequency search comprises at least one of (i) determining (4-14) whether the signal-to-noise ratio is less than or equal to a predefined value and (ii) determining (4-14) whether the receive power level is less than or equal to a predefined value.

**11.** The method of claim 5 or claim 6, wherein:
determining (3-4) whether the cell selection value is at a level associated with cell re-selection comprises determining (4-19,4-21) whether the cell selection value is at a level associated with inter-RAT search; and
if the cell selection value is at a level associated with inter-RAT search:
scanning (3-5) for at least one cell purported by the cellular network to neighbor the current cell comprises scanning (4-22) for cells that use a different RAT from that used by the current cell; and
scanning (3-6) for at least one other cell comprises scanning (4-23) for cells that use a different RAT from that used by the current cell.

**12.** The method of claim 11, wherein:
determining (4-18,4-20) the cell selection value for the current cell comprises at least one of (i) measuring (4-20) a signal-to-noise ratio of the current cell and (ii) measuring (4-20) a receive power level of the current cell; and
determining (4-19,4-21) whether the cell selection value is at a level associated with inter-RAT search comprises at least one of (i) determining (4-21) whether the signal-to-noise ratio is less than or equal to a predefined value and (ii) determining (4-21) whether the receive power level is less than or equal to a predefined value.

**13.** The method of any one of claims 6 to 12, further comprising:
ranking (4-24) based on signal quality level any cell(s) detected from at least one of intra-frequency search, inter-frequency search, and inter-RAT search; and
acquiring (4-25) a cell based on the ranking.

**14.** A non-transitory computer readable medium (33) having computer executable instructions stored thereon for execution on a processor (32) of a mobile device (30) so as to implement the method of any one of claims 1 to 12.

**15.** A mobile device (30) comprising:
a wireless access radio (31);
a processor (32); and
a scanning function configured to implement the method of any one of claims 1 to 12.
